Europäisches Patentamt

European Patent Office

Office européen des brevets

(11) Numéro de publication: **0 000 854**

**A1**

(12) **DEMANDE DE BREVET EUROPEEN**

(21) Numéro de dépôt: **78400070.5**

(22) Date de dépôt: **02.08.78**

(51) Int. Cl.²: **G 06 F 15/20, G 09 B 7/08**

(30) Priorité: **03.08.77 FR 7723903**

(43) Date de publication de la demande:
**21.02.79 Bulletin 79/4**

(84) Etats contractants désignés:
**BE CH DE GB LU NL SE**

(71) Demandeur: **LIGNES AERIENNES INTERIEURES "AIR INTER"**
**Ø AVENUE DU Maréchal Devaux**
**F-91550 Paray-Vieille-Poste(FR)**

(72) Inventeur: **Cabanis, Alain Marcel Léon**
**11 rue d'Athis**
**F-91380 Chilly-Mazarin(FR)**

(74) Mandataire: **Akerman, Casimir et al,**
**23 boulevard de Strasbourg**
**F-75010 Paris(FR)**

(54) **Machine à enseigner.**

(57) Machine à enseigner comportant au moins un dispositif de lecture de textes séparés enregistrés sur un support d'enregistrement et munie d'organes de commande manuels.

Suivant l'invention, la machine comporte, en cas de réponse inexacte, au moins un sous-programme susceptible de se dérouler automatiquement puis de provoquer le retour au programme principal sur la question posée, ledit sous-programme étant court-circuité en cas de réponse exacte.

Fig.1

EP 0 000 854 A1

1

# Machine à enseigner.

————————————

Le brevet français N° 74.08684 a pour objet une machine à enseigner comportant au moins un dispositif de lecture de textes séparés enregistrés sur un support d'enregistrement et munie d'organes de commande manuels, dans laquelle certains de ces organes manuels sont associés à des réponses possibles à des questions posées dans lesdits textes, ladite machine comportant des moyens commandés par des informations codées enregistrées sur ledit support d'enregistrement et susceptibles, d'une part, d'empêcher, en cas de fausse réponse, l'avance des textes tant que l'organe manuel correspondant à la réponse exacte n'a pas été actionné et, d'autre part, de permettre, lorsque ce dernier organe manuel a été actionné, le passage au texte suivant.

Ainsi, un texte enregistré pose une question et propose un certain nombre de réponses possibles, par exemple trois, dont une seule est exacte. La personne utilisant la machine ne peut donc pas continuer l'étude des textes enregistrés tant qu'elle n'a pas trouvé la bonne réponse à une question.

Pourtant, la machine suivant le brevet précité se contente de rester sur la question posée en cas de fausse réponse à celle-ci, sans donner à l'élève aucune indication que celle de fausse réponse.

La présente invention a pour but surtout de pallier cet inconvénient en donnant à la machine la possibilitée de poursuivre son avance en cas de fausse réponse, en adaptant cette avance à la nature de l'erreur qu'elle peut ainsi expliquer à l'élève.

Elle a pour but également d'améliorer la présentation et l'utilisation de la machine suivant le brevet principal en la rendant plus compacte et en prévoyant une visualisation des organes manuels utilisables de manière à matérialiser les choix possibles pour l'élève à un instant donné.

Suivant l'invention, la machine comporte, en cas de réponse inexacte, au moins un sous-programme susceptible de se dérouler automatiquement puis de provoquer le retour au programme principal sur la question posée, ledit sous-programme étant court-circuité en cas de réponse exacte.

Ledit sous-programme peut être unique et se contenter de signaler l'erreur par un texte et/ou une image avec retour automatique à la question posée.

Ledit sous-programme peut également comporter une séquence d'images et/ou de textes adaptés à la nature de l'erreur, avec retour automatique à la question posée.

La partie significative de chaque information codée particulière peut être répétée deux fois consécutives, les deux parties d'une information étant comparées et, dans le cas de l'inégalité des informations, relues avant l'utilisation de celles-ci.

La machine peut comporter des organes de commande statique.

La machine peut comporter des indications lumineuses associées aux organes de commande, lesdites indications lumineuses pouvant être commandées manuellement et/ou par lesdites informations codées.

Enfin, la machine peut comporter un moyen de régulation du niveau d'enregistrement des informations codées et du texte.

La description qui va suivre, en regard des dessins annexés, donnés à titre d'exemple non limitatif,
fera bien comprendre comment l'invention peut être réalisée.

Aux dessins annexés :

la figure 1 est un schéma synoptique analogue à
celui de la figure 1 du brevet précité, mais modifié
suivant la présente invention ;

la figure 2 est un schéma analogue à celui de

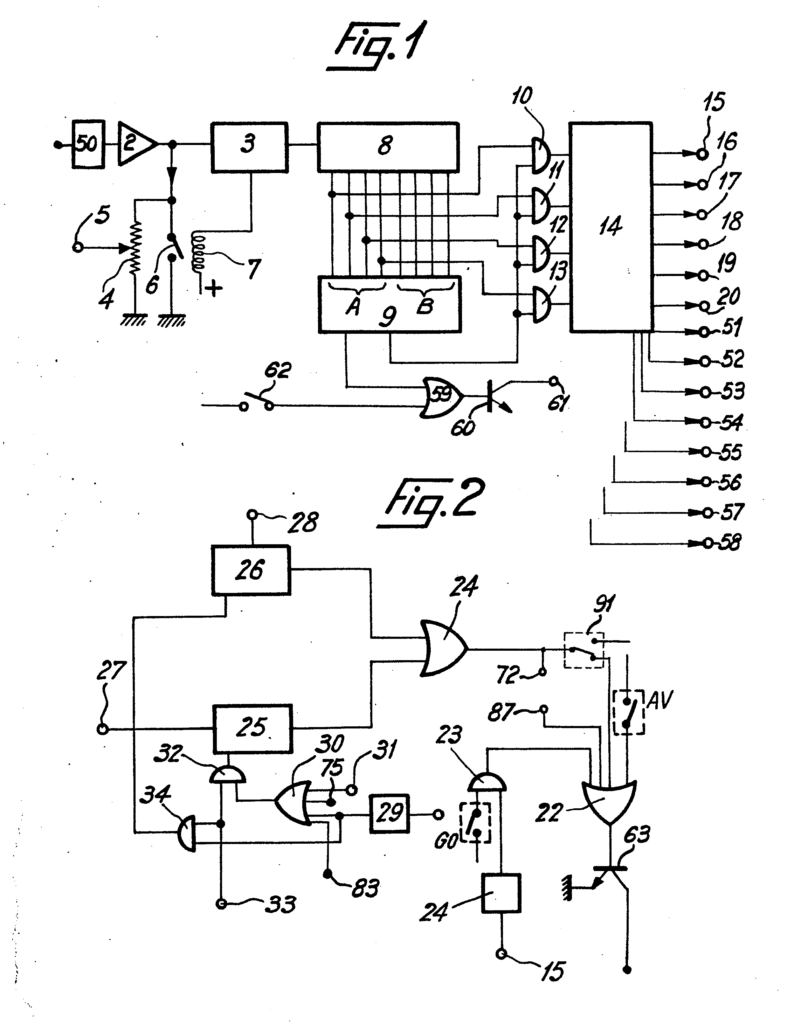

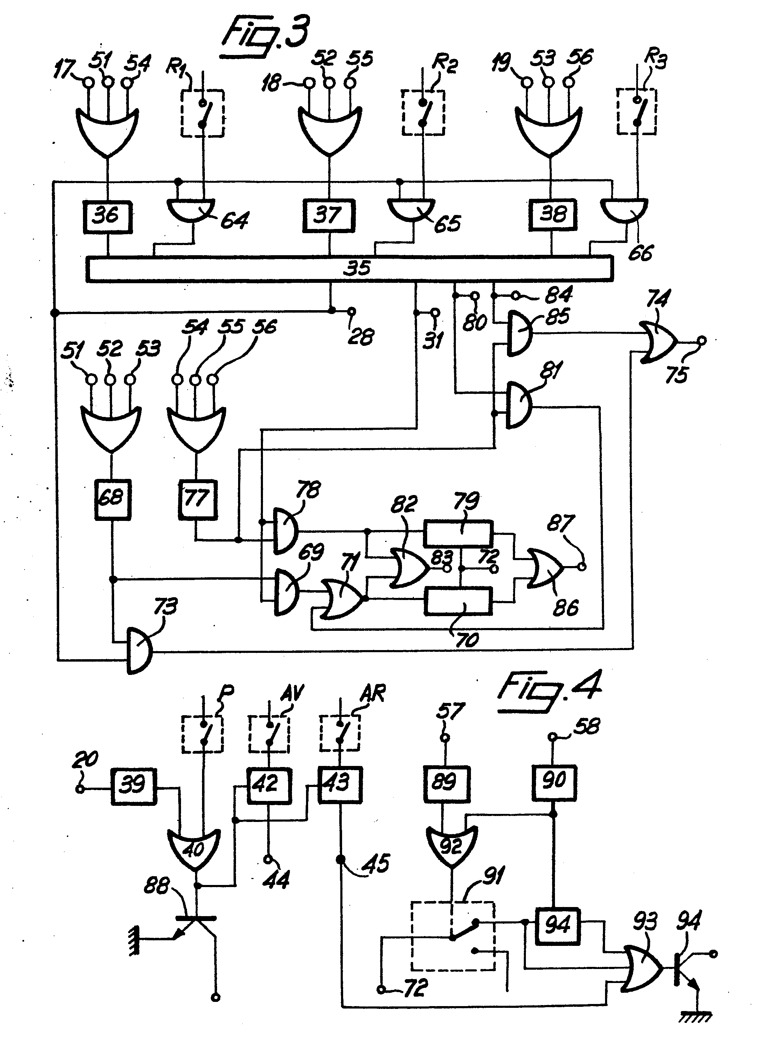

la figure 2 du brevet précité, mais modifié suivant la présente invention;

et les figures 3 et 4 sont des schémas destinés à
remplacer respectivement ceux des Figures 3 et 4 du brevet
précité.

La figure 1 montre le schéma synoptique du dispositif d'acquisition des codes par la machine selon l'invention. Dans cet exemple, on a supposé que chaque code lu
était composé de huit bits et qu'il existait quatorze codes
différents, à savoir :

- code 1 : avance différée d'un pas des diapositives et des textes ;

- code 2 : avance automatique d'un pas des diapositives et des texes ;

- code 3 : première réponse possible à une question ;

- code 4 : seconde réponse possible à une question ;

- code 5 : troisième réponse possible à une question ;

- code 6 : mise en pause automatique, avec arrêt
du support d'enregistrement ;

- code 7 : première réponse possible à une question avec explication commune aux deux
fausses réponses ;

- code 8 : deuxième réponse possible à une question avec explication commune aux deux
fausses réponses ;

- code 9 : troisième réponse possible à une question avec explication commune aux deux fausses réponses ;

- code 10 : première réponse possible à une question avec explication différentes des
deux fausses réponses ;

- code 11 : deuxième réponse possible à une question avec explication différentes des
deux fausses réponses ;

- code 12 : troisième réponse possible à une question avec explication différentes des
deux fausses réponses ;

- code 13 : retour en arrière automatique d'un pas;

- code 14 : retour en arrière automatique de deux
pas.

La borne 1 du dispositif de la figure 1, qui est reliée au dispositif de lecture (non représenté) du support d'enregistrement, reçoit donc les informations codées enregistrées sur celui-ci et associées à un texte et à la diapositive correspondante. Cette borne 1 est reliée à l'entrée d'un compresseur 50 régulant l'amplitude des informations codées dont la sortie est reliée à l'entrée d'un amplificateur 2 dont la sortie est réunie d'une part à un dispositif 3 de mise en forme des codes et d'autre part à un potentiomètre 4.Le curseur 5 de ce potentiomètre alimente le haut-parleur (non représenté) du dispositif de lecture. Le potentiomètre 4 peut être court-circuité par un contact 6 actionné par une bobine 7, elle-même alimentée à partir du dispositif de mise en forme 3. Lorsque des codes sont lus par le dispositif de lecture, le contact 6 est fermé. Par suite, ces codes ne sont pas reproduits par le haut-parleur dudit amplificateur de lecture.

Le dispositif 3 de mise en forme des codes peut comporter de façon connue un trigger de Schmidt, un dérivateur et un basculeur monostable. Il délivre à sa sortie des codes dont les 0 et les 1 sont nets et bien distincts les uns des autres. Cette sortie est reliée à l'entrée d'un registre 8 dans lequel lesdits codes sont entrés en série, mais duquel ils sont délivrés en parallèle. Un comparateur 9 permet de constater que les deux moitiés A et B d'un code lu sont identiques ou non et il valide des portes 10 à 13 de transmission d'une partie A ou B du code lu vers un décodeur 14,fournissant sur ses sorties respectives, 15 à 20 et 51 à 58, les différents codes.

Dans le cas de la non égalité des deux moitiés, un signal valide la porte OU 59 et commande par l'intermédiaire d'un transistor 60 la borne 61 de répétition du dispositif de lecture. Un organe manuel 62 commande de répétition, agit également sur la porte OU 59.

Ainsi, sur la borne 15 apparaît le code 1 qui, dès l'action sur un organe manuel 60, permet de passer à la projection de la diapositive suivant immédiatement celle qui est en cours de projection et au commentaire qui y est associé (voir figure 2).

Un tel passage peut être commandé par l'intermédiaire d'un transistor 63 (voir figure 2). Afin de pouvoir commander de différentes façons l'avance d'un pas des diapositives et des textes, comme il ressortira de ce qui suit, un semi-conducteur 63 est alimenté à travers une porte OU 22 à trois entrées, dont l'une est reliée à un organe de commande manuel AV. Une autre des entrées de la porte 22 est reliée à la sortie d'une porte ET 23 à deux entrées. L'une des entrées de la porte 23 reçoit un signal provenant de l'organe manuel 60, tandis que l'autre est réunie à la sortie d'une mémoire 24, dont l'entrée est réunie à la borne 15, sur laquelle apparaît le code 1.

Ainsi, lorsque le code 1 est présent dans la mémoire 24 et que l'on actionne l'organe manuel GO, on commande le transistor 63 qui fait avancer d'un pas les diapositives et les textes. Le même résultat est obtenu si on actionne l'organe manuel AV.

La troisième entrée de la porte OU 22 est reliée à la sortie d'une porte OU 24 dont les deux entrées sont respectivement reliées à des compteurs 25 et 26. Le compteur 25 a un temps de comptage relativement faible, par exemple 3 secondes, et il est destiné à faire automatiquement avancer les diapositives et les textes d'un pas lorsqu'un silence, dont la durée est égale à son temps de comptage, se produit dans les textes enregistrés. Le compteur 25 est automatiquement et constamment remis à zéro pendant la lecture d'un texte par l'intermédiaire d'une borne 27 qui lui transmet un signal indiquant la présence de son dans le dispositif de lecture. Le compteur 26 a un temps de comptage plus long, par exemple 30 secondes, correspondant à la durée totale d'un texte et des codes correspondants et il est destiné à faire automatiquement avancer les diapositives et les textes d'un pas, au bout d'un temps pour lequel le texte en cours sera obligatoirement terminé. Le compteur 26 peut être bloqué à partir d'un signal apparaissant sur une borne 28 et indiquant que la réponse à une question posée précédemment est fausse, comme on le verra ci-après. Ainsi, le compteur 26 permet de continuer l'étude des textes, si tous les autres moyens pour faire avancer les textes ont échoué, sauf en cas de réponse fausse.

Par ailleurs, les compteurs 25 et 26 ne sont autorisés à compter que si l'appareil n'est pas en pause (manuelle ou automatique) et que si le code 2 est présent avec, pour le compteur 25, la condition supplémentaire qu'une réponse exacte est fournie à une question antérieure.

A cet effet, la borne 16 sur laquelle apparaît le code 2 qui permet, dès la fin d'un texte, de faire passer à la diapositive et au texte suivants, est reliée à une mémoire 29 dont la sortie est réunie à l'une des entrées d'une porte OU 30 dont l'autre entrée est reliée à une borne 31 sur laquelle apparaît un signal indiquant que la réponse à la question antérieure est exacte· La sortie de la porte 30 est reliée à l'une des entrées d'une porte ET 32, dont la sortie commande le comptage du compteur 25 et dont l'autre entrée est réunie à une borne 33, sur laquelle apparaît un signal indiquant que l'appareil n'est pas en pause.Le comptage du compteur 26 est,par ailleurs, commandé par une porte ET 34 dont l'une des entrées est reliée à la borne 33 et l'autre à la sortie de la mémoire 29.

On voit ainsi que, grâce au code 2, l'avance des diapositives et du texte est automatique à la fin d'un texte, soit trois secondes après celle-ci, soit trente secondes après le début du texte, suivant la voie qui fonctionne, à condition que l'appareil soit en pause et qu'une réponse exacte à une question ait été donnée.

La figure 3 illustre le traitement des codes 3, 4 et 5 correspondant à des réponses possibles à une même question contenue dans un texte enregistré.

Le dispositif de la figure 3 comporte un comparateur 35 avec une borne de sortie 28 indiquant que la réponse est fausse et une borne de sortie 31 indiquant que cette réponse est bonne. Ce comparateur 35 comporte trois paires d'entrées. A la première paire d'entrées sont reliés, à travers une mémoire 36, la borne 17 sur laquelle apparaît le code 3 et un premier organe de réponse possible $R_1$. La réponse $R_1$ est autorisée par une porte ET 64 elle-même validée par l'absence de réponse fausse. De même, aux autres paires d'entrées sont respectivement reliés, à travers des mémoires 37 ou 38, les bornes 18 et 19 sur lesquelles apparaissent les codes respectifs 4 et 5 et un second et un troisième organes de réponse possible $R_2$ et $R_3$, les réponses $R_2$ et $R_3$ étant respectivement autorisées par des portes ET 65 et 66, analogues à la porte ET 64.

Lorsqu'une question est posée dans un texte, le code de réponse correspondant est envoyé au décodeur 14 et par suite au comparateur 35. Si la personne qui se sert de la machine appuie sur un organe $R_1$, $R_2$ ou $R_3$ qui correspond à ce code de réponse, un signal de réponse exacte apparaît sur la borne 31. Si, au contraire, ladite personne appuie sur les organes $R_1$, $R_2$ ou $R_3$ qui ne correspondent pas à ce code de réponse, un signal de réponse fausse apparaît sur la borne 28, interdisant de ce fait une nouvelle action sur un autre organe. Une répétition du texte est nécessaire afin de donner une autre réponse. Bien entendu, les signaux apparaissant sur les bornes 28 et 31 peuvent être utilisés pour actionner des témoins lumineux ou sonores.

Une porte OU 67 détecte la présence des codes 7-8-9 correspondant aux trois réponses possibles avec dans le cas d'une réponse exacte, l'avance automatique de deux pas au texte suivant. Une mémoire 68 conserve cet état et valide une porte ET 69, laquelle reçoit sur une autre entrée le signal de réponse exacte. Cette porte commande un circuit temporisé 70 à travers une porte 71 permettant l'avance du dispositif de lecture de deux pas. Le circuit 70 est validé par une borne 72 correspondant à la fin du temps de comptage.

Dans le cas de deux réponses fausses, une porte 73, validée par la borne 28, signal d'erreur, commande une porte OU 74 qui à son tour libère le compteur 25 (borne 75) provoquant l'avance au texte suivant.

De même une porte OU 76 détecte la présence des codes 10-11 et 12 correspondant aux trois réponses possibles avec, dans le cas d'une réponse exacte, l'avance automatique de trois pas au texte suivant. Une mémoire 77 conserve cet état et valide une porte ET 78, laquelle reçoit sur une autre entrée le signal de réponse exacte. Cette porte commande un circuit temporisé 79 permettant l'avance du dispositif de lecture de trois pas. Le circuit 79 est validé par la borne 72.

Dans le cas de réponse fausse (borne 80), une porte 81, valide par la mémoire 77, commande la porte OU 71 qui à son tour libère le compteur 25 par l'intermédiaire d'une porte 82 (borne 83) provoquant l'avance de deux pas du texte suivant.

Dans le cas de réponse fausse (borne 84), une porte 85, validée par la mémoire 77, commande la porte OU 74 qui libère le compteur (borne 75) de la porte 30 (voir figure 2).

Les circuits temporisés 70 et 79 commandent une porte OU 86 qui à son tour commande l'avance (borne 87, porte 22, figure 2).

Le code 6, ou code de pause de l'appareil, apparaissant à la borne 20, est transmis (voir figure 4), à travers une mémoire 39 à l'une des entrées d'une porte OU 40 dont l'autre entrée est commandée par l'organe manuel P et dont la sortie commande un transistor 88 de mise en pause. Par ailleurs, le signal apparaissant à la sortie de la porte 40 est appliqué à des inhibiteurs 42 et 43 commandés respectivement par des organes manuels AV et AR, destinés à la commande manuelle d'avance ou de recul d'un pas des textes et des diapositives. Ainsi, les signaux d'avance ou de recul apparaissant respectivement sur les bornes 44 et 45 sont délivrés à des organes moteurs, par exemple des électroaimants (non représentés), que si l'appareil n'est pas en pause.

Les codes 13 et 14 (bornes 57 et 58) mis en mémoire par des circuits 89 et 90, commandent un inverseur 91 au travers d'une porte 92. Cet inverseur inverse la sortie de la porte 24 (borne 72), de la porte 22 vers la porte OU 93, ainsi que le circuit temporisé 94. La porte 93 est reliée à un transistor 94 de commande de marche arrière.

Le code 13 permet la marche arrière d'un pas à la fin du temps de comptage, et le code 14 valide le circuit temporisé 94 et permet la marche arrière de deux pas.

Le dispositif de commande de la machine comporte des organes manuels associés à des informations lumineuses commandées soit automatiquement selon les codes détectés, soit manuellement, de façon à ne laisser apparaître que les commandes validées et nécessaires au bon fonctionnement de l'appareil.

1°) Après mise sous tension, apparition des indications suivantes :

Avance

Arrière

Répétition

Arrêt.

2°) Après lecture du code de pause automatique :

GO.

3°) Après lecture du code d'avance différée :

Avance

Arrière

Répétition

Stop

GO.

4°) Après lecture d'un code réponse :

Répétition

Question

Première réponse possible

Deuxième réponse possible

Troisième réponse possible.

5°) Après action manuelle sur la commande stop :

GO.

Dans tous les cas les commandes manuelles sont contrôlées par l'extinction momentané e de l'information lumineuse.

Il va de soi que des modifications peuvent être apportées au mode de réalisation qui vient d'être décrit, notamment par substitution de moyens techniques équivalents, sans sortir pour cela du cadre de l'invention.

11

# REVENDICATIONS

1.- Machine à enseigner comportant au moins un dispositif pour lire des textes séparés enregistrés sur un support d'enregistrement et pourvus de moyens manuels de commande, dans laquelle certains desdits moyens de commande sont associés à des réponses possibles posées dans lesdits textes, ladite machine comprenant des moyens commandant l'information codée enregistrée sur ledit support d'enregistrement et adaptés d'une part, à éviter l'avance du texte dans le cas d'une mauvaise réponse jusqu'à ce que la commande manuelle correspondant à la réponse correcte soit actionnée et, d'autre part, permettant l'avance du texte suivant lorsque ladite commande manuelle est actionnée, caractérisée en ce que ladite machine comporte en cas de réponse inexacte au moins un sous-programme susceptible de se dérouler automatiquement puis de provoquer le retour au programme principal sur la question posée, ledit sous-programme étant court circuité en cas de réponse exacte.

2. - Machine suivant la revendication 1, caractérisée en ce que ledit sous-programme est unique et signale l'erreur par un texte et/ou une image, avec retour automatique à la question posée en fin dudit sous-programme.

3.- Machine suivant la revendication 1, caractérisée en ce que ledit sous-programme comporte une séquence d'images et/ou de textes adaptés à la nature de l'erreur, avec retour automatique à la question posée, en fin dudit sous-programme.

4.- Machine suivant l'une quelconque des revendications 1 à 3, caractérisée en ce que la partie significative de chaque information codée particulière est répétée deux fois consécutives, les deux parties d'une information étant comparées et, dans le cas de l'inégalité des informations, relues avant l'utilisation de celles-ci.

5.- Machine suivant l'une quelconque des revendications 1 à 4, caractérisée en ce qu'elle comporte des organes de commande statique.

6.- Machine suivant l'une quelconque des revendications 1 à 5, caractérisée en ce qu'elle comporte des indications lumineuses associées aux organes de commande, lesdites indications lumineuses pouvant être commandées manuellement et/ou par lesdites informations codées.

7.- Machine suivant l'une quelconque des revendications 1 à 6, caractérisée en ce qu'elle comporte un moyen de régulation du niveau d'enregistrement des informations codées et du texte.

0000854

_Fig.1_

_Fig.2_

2/2

Fig.3

Fig.4

0000854

Office européen
des brevets

**RAPPORT DE RECHERCHE EUROPEENNE**

0000854
Numéro de la demande

EP 78 40 0070

| | **DOCUMENTS CONSIDERES COMME PERTINENTS** | | **CLASSEMENT DE LA DEMANDE (Int. Cl.²)** |
|---|---|---|---|
| Catégorie | Citation du document avec indication, en cas de besoin, des parties pertinentes | Revendication concernée | |
| | US - A - 4 005 530 (FUJI PHOTO FILM)<br><br>* Colonne 2, lignes 8-23; colonne 3, lignes 16-55; de colonne 6, ligne 39 - colonne 8, ligne 38; colonne 10, lignes 44-66; figures 2 et 8 *<br><br>---- | 1,3,5, 6 | G 06 F 15/20<br>G 09 B 7/08 |

**DOMAINES TECHNIQUES RECHERCHES (Int. Cl.²)**

G 06 F 15/20
G 09 B 7/08

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 17-11-1978 | BURGAUD |

OEB Form 1503.1  06.78